# EUROPÄISCHE PATENTSCHRIFT

(11) **EP 0 559 010 B1**
(45) Veröffentlichungstag und Bekanntmachung des Hinweises auf die Patenterteilung: **20.03.1996**
(21) Anmeldenummer: 93102584.5
(22) Anmeldetag: 19.02.1993
(51) Int. Cl.: B01D 53/48, B01D 53/86, B01J 21/06

(54) **Katalysator für die Carbonylsulfid-Hydrolyse**
Catalyst for hydrolysing carbonylsulfide
Catalyseur pour l'hydrolyse de sulfide carbonyle

(30) Priorität: 05.03.1992 DE 4206913
(43) Veröffentlichungstag der Anmeldung: 08.09.1993
(73) Patentinhaber: KRONOS TITAN-Gesellschaft mbH, D-51307 Leverkusen (DE)
(72) Erfinder: Hartmann, Achim, Dipl.-Ing., W-5024 Pulheim (DE)

(56) Entgegenhaltungen:
- EP-A- 0 218 153
- EP-A- 0 265 551
- EP-A- 0 311 515
- DE-A- 2 846 476
- US-A- 4 511 668
- DATABASE WPI Section Ch, Week 8903, Derwent Publications Ltd., London, GB; Class E36, AN 89-019394

## Beschreibung

Die Erfindung richtet sich auf ein Verfahren zur Hydrolyse von Carbonylsulfid in einem Gasgemisch, das bei erhöhter Temperatur über einen Titandioxidkatalysator geleitet wird.

Bei der Herstellung von Titandioxidpigmenten durch Dampfphasenoxidation von Titantetrachlorid, dem sogenannten Chloridverfahren, werden titanhaltige Erze oder Schlacke in reduzierender Atmosphäre in einem Reaktor bei etwa 1000 °C chloriert. Als Reduktionsmittel werden kohlenstoffhaltige Stoffe, wie z.B. Petrolkoks, verwendet. Das den Reaktor verlassende Gasgemisch enthält neben den Metallchloriden (vor allem Titantetrachlorid und Eisen(II)-chlorid) Koks, nicht aufgeschlossenes Erz, Siliziumdioxid, Kohlendioxid, Kohlenmonoxid, Stickstoff, Hydrogenchlorid und durch den Schwefelgehalt im Koks bedingt Carbonylsulfid. Nicht vollständig abgeschiedenes Titantetrachlorid und das Hydrogenchlorid müssen z. B. gemäß der DE 37 42 838 A1 aus dem Gasstrom entfernt werden; das Abgas wird vor dem Einleiten in die Atmosphäre wegen seines Gehaltes an Kohlenmonoxid verbrannt. Bei der Abgasverbrennung wird Carbonylsulfid in Schwefeldioxid und Kohlendioxid umgewandelt. Aus den Abgasen müssen die Schwefelverbindungen entfernt werden. Es ist sinnvoll, vor der Abgasverbrennung die Entschwefelung durchzuführen, weil so die zu reinigende Gasmenge erheblich kleiner ist. Die Entschwefelung vor der Abgasverbrennung umfaßt mindestens 2 Stufen; zunächst die Hydrolyse von Carbonylsulfid; danach erfolgt die Oxidation von Schwefelwasserstoff zu Schwefel.

Die Erfindung betrifft den Prozeß der Stufe 1 bei der Abgasentschwefelung; Verfahren der Stufe 2 zur Entfernung von Schwefelwasserstoff sind bekannt.

Die Umsetzung von Carbonylsulfid (bei COS-Anteilen im Gasgemisch bis 0,5 Volumenprozent) mit Wasser unter Einsatz eines Katalysators aus Aluminiumoxid oder Titandioxid ist in der EP 215 317 A1 beschrieben. Neutral oder schwach alkalische Gasgemische sind so zu entschwefeln. Enthalten jedoch die Gase auch saure Bestandteile (z. B. 1-2 ppm Hydrogenchlorid und Hydrolyseprodukte des Titantetrachlorids, wie sie für Abgase des Chloridprozesses typisch sind) geht die Umwandlungsgeschwindigkeit infolge rascher Erschöpfung des Katalysators zurück; der Katalysator ist häufig zu erneuern.

In den US-A-4 485 189, 4 422 958, 4 532 119 ist vorgeschlagen worden, das Titandioxid mit Erdalkalisulfaten zu behandeln, um die Umsatzrate zu erhöhen. Es zeigt sich jedoch, daß damit das Problem, die Katalysatorstandzeit bei hydrogenchloridhaltigen Gasen zu erhöhen, auch nicht befriedigend gelöst wird, sodaß die Carbonylsulfidhydrolyse mit dem aufwendigen, lange bekannten Verfahren an aktiviertem Kohlenstoff betrieben werden muß, wie es beispielsweise in der DE 20 54 016 A beschrieben ist, wobei jedoch hier wieder Probleme bei der Entsorgung und Regenerierung des Katalysators auftreten.

Der Erfindung liegt das Problem zugrunde, einen Katalysator bereitzustellen, der in saurem Gas die Umsetzung von Carbonylsulfid in Schwefelwasserstoff wirksam beschleunigt, dabei seine Wirksamkeit lange beibehält und außerdem auch wirtschaftlich regenerierbar ist.

Das Problem wird von einem Katalysator der eingangs genannten Art gelöst, der dadurch gekennzeichnet ist, daß als Katalysator versinterte Titandioxid-Partikel eingesetzt werden, die als Nebenprodukt bei der großtechnischen Herstellung von Titandioxid nach dem Chloridverfahren anfallen und als Scheuerteilchen (scrub-solids) für die Aufrechterhaltung des Wärmeübergangs bei der indirekten Kühlung der Reaktionsgase der Titantetrachlorid-Gasphasenoxidation Verwendung finden.

Weitere vorteilhafte Ausgestaltungen des Verfahrens sind in den Unteransprüchen beschrieben.

Versinterte Titandioxid-Partikel sind als Scheuerteilchen bekannt und werden bei der Titandioxidherstellung nach dem Chloridverfahren eingesetzt, wenn die Reaktionsgase durch indirekten Wärmeaustausch gekühlt werden sollen, denn durch sie können die Kühlflächen weitgehend belagfrei gehalten werden. Die Scheuerteilchen sind ein Nebenprodukt bei der Titandioxidherstellung nach dem Chloridverfahren. Ihre Herstellung ist beispielsweise in der EP 265 551 B1 beschrieben. Das Verfahren kann auch so gesteuert werden, daß mehr Scheuerteilchen anfallen, als beim Prozeß der Pigmentherstellung benötigt werden. Solche Scheuerteilchen bestehen aus gesintertem Titandioxid, das einer speziellen zusätzlichen Calcinierung unterworfen worden ist, und haben eine Partikelgröße bevorzugt über 0,15 mm. Das Scheuerteilchen-Basismaterial besteht aus Ansätzen und Verkrustungen, die sich an den Begrenzungswänden der Reaktionszone bilden, wenn Titandioxid nach dem Chloridverfahren durch Oxidation von Titantetrachlorid mit Sauerstoff in der Gasphase hergestellt wird. Für solche Scheuerteilchen ist auch der Name scrub-solids gebräuchlich.

Es ist überraschend, das solche versinterte Titandioxid-Partikel gerade für einen katalytischen Prozeß, der sich auf der Partikeloberfläche abspielt, besonders geeignet sind, denn die bekannten Scheuerteilchen aus Titandioxid haben eine relativ geringe spezifische Oberfläche in der Größenordnung von 2 m²/g.

Besonders bevorzugt sind Scheuerteilchen, die vor dem Calcinieren mit einer alkalischen Lösung behandelt worden sind, so daß der Alkaligehalt der gesinterten Titandioxid-Partikel 0,01 bis 0,20 Gewichtsprozent Natriumhydroxid oder 0,01 bis 0,30 Gewichtsprozent Kaliumhydroxid (jeweils bezogen auf wasserfreies Titandioxid) beträgt. Es ist aber auch möglich, daß "reine" Titandioxidscheuerteilchen als Katalysator eingesetzt werden, wobei jedoch eine nachträgliche Behandlung mit Natriumhydroxid oder Natriumaluminat, wie nachfolgend beschrieben, die Katalysatoreignung noch verbessert.

Grundsätzlich hängt es nicht davon ab, bei welchem großtechnischen Verfahren der erfindungsgemäße Katalysator zur Hydrolyse von Carbonylsulfid eingesetzt werden soll. In idealer Weise ist das Verfahren jedoch bei der ersten Stufe der Entschwefelung von Chlorierungsabgasen geeignet, wenn in dem Chlorierungsreaktor titanhaltige Erze chloriert werden und aus dem Titantetrachlorid Titandioxidpigmente hergestellt werden sollen. In diesem Fall können die als Katalysator verwendeten versinterten Titandioxid-Partikel (scrub-solids) praktisch in einem geschlossenen Kreislauf betrieben werden. Der verbrauchte Katalysator kann entweder in bekannter Weise in den Wärmeaustauscher zur Kühlung der Reaktionsgase bei der Titantetrachlorid-Gasphasenoxidation eingespeist werden, wo er unverändert seine ursprüngliche Funktion als Scheuerteilchen übernehmen kann, oder er kann auch in den Chlorierungsreaktor eingespeist werden, wo er praktisch als aufzuschließender Rohstoff einer Umsetzung unterliegt und den Reaktor als Titantetrachlorid verläßt. Es treten überhaupt keine Probleme bei der Entsorgung des Katalysators auf.

Es hat sich gezeigt, daß die als Katalysator eingesetzten versinterten Titandioxid-Partikel (scrub-solids) aber auch auf eine einfache Art regeneriert werden können, indem sie erneut mit Natriumhydroxid oder Natriumaluminat nachbehandelt werden.

Da es sich bei der katalytischen Hydrolyse um eine Oberflächenreaktion handelt, wird der Katalysator im Fließbett, im Festbett oder als Wirbelschicht angewendet. Die Arbeitstemperatur liegt bevorzugt im Bereich 100 bis 200 °C, die Kontaktzeit in der Größenordnung von Sekunden.

Ganz besonders günstig wird die Hydrolyse von Carbonylsulfid beschleunigt, wenn die erfindungsgemäßen versinterten Titandioxid-Partikel mit Natriumhydroxid- oder Natriumaluminat-Lösungen behandelt worden sind. Durch eine solche Behandlung lassen sich verbrauchte Katalysatoren auch reaktivieren. Größenordungsmäßig sollen 1 % Natriumhydroxid bzw. 2 % Natriumaluminat bezogen auf die Titandioxid-Partikel aufgebracht werden. Die Behandlung mit Natriumaluminat ist wirksamer als mit Natriumhydroxid.

Die Erfindung ist weiter beispielhaft erläutert.

### Beispiel 1

Ein Abgas, das bei der Chlorierung von titanhaltigen Rohstoffen anfällt, hat beim Einsatz von Koks mit 1,6 % Schwefel nach Abtrennung der Metallchloride, insbesondere des Titantetrachlorids, und Auswaschung des Hydrogenchlorids eine Temperatur von 30 °C und folgende Zusammensetzung:

| | |
|---|---|
| CO | 42,4 Vol.-% |
| CO₂ | 30,7 Vol.-% |
| COS | 0,43 Vol.-% |
| H₂S | 1,0 ppm |
| H₂O | 4,75 Vol.-% |
| HCl | 2,0 ppm |
| TiOCl₂ | 1,0 ppm |
| N₂ | Rest |

4000 Nm³/h dieses Gases werden in einem Röhrenbündelwärmeaustauscher auf 200 °C aufgeheizt und durch ein Katalysatorbett, bestehend aus 6000 l scrub-solids der Korngröße 1-1,5 mm, geleitet. Der Katalysator befindet sich in einem Hohlzylinder mit gasdurchlässigen Seitenwänden der Abmessungen:

| | |
|---|---|
| Außendurchmesser | 1600 mm |
| Innendurchmesser | 800 mm |
| Zylinderhöhe | 4000 mm. |

Das konvertierte Abgas hat nach Durchströmung des Katalysatorbettes folgende Zusammensetzung:

| | |
|---|---|
| CO | 42,4 Vol.-% |
| CO₂ | 31,1 Vol.-% |
| COS | 42,0 ppm |
| H₂S | 0,42 Vol.-% |
| H₂O | 4,32 Vol.-% |
| HCl | 2,0 ppm |
| TiOCl₂ | 1,0 ppm |
| N₂ | Rest. |

Aus der Gasanalyse ist ersichtlich, daß 99 % des Carbonylsulfids in Schwefelwasserstoff umgewandelt werden. Nach 400 h bzw. 600 h Betriebszeit liegt der Umsatz bei 98,8 % bzw. 98,5 %. Der Schwefelwasserstoff kann jetzt aus dem Abgas durch Waschung mit Eisen(III)- bzw. Vanadium(VI)-haltigen Lösungen problemlos, z.B. nach dem LO-CAT- bzw. Stretfort-Verfahren entfernt werden.

### Beispiel 2

Es wird analog wie im Beispiel 1 verfahren, jedoch bei der Chlorierung ein Koks mit 4,7 % Schwefel eingesetzt. Das Abgas enthält jetzt vor dem Einleiten in den Kontaktapparat 1,21 Vol.-% Carbonylsulfid, nach der Konversion sind es noch 112 ppm. Das entspricht einem Carbonylsulfid-Umsatz von etwa 99 %. Nach 800 h Betriebszeit reduziert sich der Carbonylsulfid-Umsatz auf 98,1 %.

### Beispiel 3

Es wird analog wie in Beispiel 1 verfahren mit dem Unterschied, daß verbrauchte scrub-solids (Abfall des Carbonylsulfid-Umsatzes auf unter 90 %) vor dem Einsatz mit einer 10 %igen Natriumhydroxidlösung besprüht werden. Die aufgenommene Menge Natriumhydroxid liegt bei etwa 1 %, bezogen auf die Titandioxidmasse. Nach Beginn des Versuches und nach 600 h liegt der Carbonylsulfid-Umsatz unverändert bei 99,3 %.

Es läßt sich erreichen, daß ein geschlossener Kreislauf für die versinterten Titandioxid-Partikel möglich ist. Ein Teilstrom der vom Pigment abgetrennten, calcinierten und in der Regel mit Alkalien nachbehandelten versinterten Titandioxid-Partikel wird der Kontaktapparatur zugeführt, wobei in einer besonders bevorzugten Ausführungsform diese versinterten Titandioxid-Partikel vor ihrem Einsatz noch mit Natriumaluminatlösung besprüht werden. In dem aus der Kontaktapparatur austretenden Gas ist das Carbonylsulfid zu mehr als 98 % in Schwefelwasserstoff umgewandelt worden. In einer nachgeschalteten Anlage kann dann der Schwefelwasserstoff nach konventionellen Verfahren zu Elementarschwefel oxidiert werden.

Die Temperatur in der Katalysatorschüttung muß über 60 °C liegen, bevorzugt über 80 °C. Die Höhe der Katalysatorschüttung und die Durchströmungsgeschwindigkeit soll eine Mindestkontaktzeit von 3 s ergeben. Ganz besonders bevorzugt sind Titandioxid-Partikel mit einem mittleren Teilchendurchmesser von 1,0 bis 1,5 mm.

Wird zum Vergleich das Abgas nur mit Wasserdampf (zwischen der 3- und 21-fachen stöchiometrischen Menge Wasser) bei Temperaturen um 140 °C ohne Katalysator behandelt, wird praktisch keine hydrolytische Spaltung von Carbonylsulfid gemessen.

Es hat sich gezeigt, daß der erfindungsgemäße Katalysator auch bei Einsatz relativ schwefelreicher Kokssorten, und demzufolge höheren Carbonylsulfid-Gehalten im Abgas, einen Carbonylsulfid-Hydrolyseumsatz von etwa 98 % ermöglicht.

## Patentansprüche

1. Verfahren zur Hydrolyse von Carbonylsulfid in einem Gasgemisch, das bei erhöhter Temperatur über einen Titandioxidkatalysator geleitet wird, dadurch gekennzeichnet, daß als Katalysator versinterte Titandioxid-Partikel eingesetzt werden, die als Nebenprodukt bei der großtechnischen Herstellung von Titandioxid nach dem Chloridverfahren anfallen und als Scheuerteilchen (scrub-solids) für die Aufrechterhaltung des Wärmeübergangs bei der indirekten Kühlung der Reaktionsgase der Titantetrachlorid-Gasphasenoxidation Verwendung finden.

2. Verfahren nach Anspruch 1, dadurch gekennzeichnet, das als Katalysator versinterte Titandioxid-Partikel eingesetzt werden, die mit Natriumhydroxid- oder Natriumaluminat-Lösung nachbehandelt worden sind.

3. Verfahren nach Anspruch 1 oder 2, dadurch gekennzeichnet, daß die Temperatur des Katalysators über 60 ° C, bevorzugt über 80 ° C, liegt.

4. Verfahren nach Anspruch 1, 2 oder 3, dadurch gekennzeichnet, daß versinterte Titandioxid-Partikel eingesetzt werden, deren Teilchengröße im Bereich 1,0 bis 1,5 mm liegt.

5. Verfahren nach einem der Ansprüche 1 bis 4, dadurch gekennzeichnet, daß zur Regenerierung des Katalysators die versinterten Titandioxid-Partikel mit Natriumhydroxid- oder Natriumaluminat-Lösung behandelt werden.

## Claims

1. Process for the hydrolysis of carbonyl sulphide in a gas mixture which is passed at elevated temperature over a titanium dioxide catalyst, characterised in that sintered titanium dioxide particles are used as the catalyst, which particles arise as a by-product of the large scale industrial production of titanium dioxide using the chloride process and are used as scrub particles (scrub solids) to maintain heat transfer during indirect cooling of the reaction gases from the gas phase oxidation of titanium tetrachloride.

2. Process according to claim 1, characterised in that titanium dioxide particles which have been post-treated with sodium hydroxide or sodium aluminate solution are used as the catalyst.

3. Process according to claim 1 or 2, characterised in that the temperature of the catalyst is above 60°C, preferably above 80°C.

4. Process according to claim 1, 2 or 3, characterised in that sintered titanium dioxide particles are used which have a particle size in the range from 1.0 to 1.5 mm.

5. Process according to one of claims 1 to 4, characterised in that, in order to regenerate the catalyst, the sintered titanium dioxide particles are treated with sodium hydroxide or sodium aluminate solution.

## Revendications

1. Procédé pour l'hydrolyse de sulfure de carbonyle dans un mélange gazeux, qui, à température élevée, est conduit sur un catalyseur de dioxyde de titane, caractérisé en ce que des particules de dioxyde de titane frittées sont utilisées comme catalyseur, particules qui sont générées en tant que sous-produit dans la fabrication à l'échelle industrielle de dioxyde de titane selon le procédé de chloration, et qui sont employées comme particules de frottement (scrubsolids) pour le maintien du transfert de chaleur au cours du refroidissement indirect des gaz de la réaction de l'oxydation en phase gazeuse du tétrachlorure de titane.

2. Procédé selon la revendication 1, caractérisé en ce que des particules de dioxyde de titane frittées sont utilisées comme catalyseur, particules qui ont été retraitées avec une solution d'hydroxyde de sodium ou d'aluminate de sodium.

3. Procédé selon la revendication 1 ou 2, caractérisé en ce que la température du catalyseur est supérieure à 60 °C, de préférence à 80 °C.

4. Procédé selon la revendication 1, 2 ou 3, caractérisé en ce que les particules de dioxyde de titane frittées qui sont utilisées ont une grosseur de particules qui se situe entre 1,0 et 1,5 mm.

5. Procédé selon l'une des revendications 1 à 4, caractérisé en ce que les particules de dioxyde de titane frittées sont traitées avec une solution d'hydroxyde de sodium ou d'aluminate de sodium pour régénérer le catalyseur.
